# EUROPÄISCHE PATENTSCHRIFT

(11) **EP 3 252 358 B1**
(45) Veröffentlichungstag und Bekanntmachung des Hinweises auf die Patenterteilung: **06.02.2019**
(21) Anmeldenummer: 16202687.6
(22) Anmeldetag: 07.12.2016
(51) Int. Cl.: F16K 11/044, F16K 11/07, F16L 37/42

(54) **HYDRAULISCHES UMSCHALTVENTIL**
HYDRAULIC REVERSING VALVE
SOUPAPE HYDRAULIQUE D'INVERSION

(30) Priorität: 02.06.2016 DE 202016102957 U
(43) Veröffentlichungstag der Anmeldung: 06.12.2017
(73) Patentinhaber: Stemplinger Gesellschaft für Konstruktion, Verzahnungs- und Fertigungstechnik mbH, 94051 Hauzenberg (DE)
(72) Erfinder: DONAUBAUER, Michael, 94107 Untergriesbach (DE); STEFAN, Thomas, 94051 Hauzenberg (DE)
(74) Vertreter: Gustorf, Gerhard

(56) Entgegenhaltungen:
- EP-A2- 1 616 938
- AT-B- 414 163
- DE-B3- 10 317 445
- US-A- 5 311 899

## Beschreibung

Die Erfindung betrifft ein hydraulisches Umschaltventil mit einem längsverschieblich in einem Gehäuse gelagerten Sperrkolben nach dem Oberbegriff des Patentanspruchs 1.

Ein derartiges Umschaltventil ist geeignet zur Verwendung in landwirtschaftlichen Maschinen, bei denen ein Zwei-Wege-Ventil eine Umschaltung zwischen zwei Verbrauchern ermöglichen soll, beispielsweise einem Fronthubwerk und einem Anbaugerät eines Schleppers. Dabei muss dafür gesorgt werden, dass entweder nur das Anbaugerät oder nur das Fronthubwerk mit Druckflüssigkeit, im Allgemeinen Drucköl versorgt wird.

Ein hydraulisches Umschaltventil nach dem Oberbegriff des Anspruchs 1 ist bekannt aus AT 414 163 B. Bei diesem besteht der Sperrkolben aus einem Zylinder, in der eine axiale Stange fest angebracht ist, die durch den nach beiden Seiten offenen Zylinderraum hindurchführt und an deren einem Ende der Sperrkopf befestigt ist.

Ein ähnliches Umschaltventil ist aus DE 103 17 445 B3 bekannt, bei dem ebenfalls der Sperrkopf an einem Ende einer axialen Stange befestigt ist, während am gegenüberliegenden Ende ein kompliziert aufgebautes Schließelement angebracht ist.

Ein weiteres Beispiel für ein derartiges Umschaltventil ist Gegenstand der DE 1 525 680 A. Hierbei handelt es sich um eine Ventilkupplung für unter Druck stehende Schlauchleitungen, wobei die Umschaltung aus der Sperrstellung in die Öffnungsstellung hydraulisch erfolgt, um eine Last, beispielsweise ein Anbaugerät zu steuern.

Eine ähnliche Kupplung mit axial verstellbaren Ventilkegeln ist in FR 1 385 658 B beschrieben und dargestellt.

Gegenstand von DE 100 14 906 B4 ist ein Mehrwege-Ventil zum Schalten einer Fluidströmung mittels eines Längsschiebers, der allerdings ebenfalls hydraulisch über einen Kolben betätigt wird. Ein ähnliches Schieberventil zeigt DE 197 06 059 C2.

Aus US 5 311 899 ist eine Kupplungsvorrichtung bekannt, die dazu dient, aus einem Transporttank unterschiedliche Flüssigkeiten in einen Vorratstank und umgekehrt zu leiten.

Der Erfindung liegt die Aufgabe zugrunde, ein hydraulisches Umschaltventil mit einem einfach ausgebildeten Sperrkolben zur Verfügung zu stellen, bei dem die Umschaltung bei Anschluss einer Verbraucherleitung mechanisch erfolgt und damit automatisch abläuft.

Die Lösung dieser Aufgabe ergibt sich aus den Merkmalen des Patentanspruchs 1. Der Sperrkolben, der längsverschieblich in dem Gehäuse gelagert ist, hat einen Sperrkopf, der den Hohlraum des Sperrkolbens an einem Ende abschließt. Durch die Kraft der Druckfeder wird der einstückig mit dem Sperrkolben ausgebildete Sperrkopf in seine Schließstellung gedrückt, in der er über den Ventilsitz des ersten Auslasses axial vorsteht. Beim Aufsetzen des Anschlusses einer Verbraucherleitung, beispielsweise eines landwirtschaftlichen Anbaugerätes wird der Sperrkopf mechanisch und automatisch in die Öffnungsstellung gedrückt, in der der Sperrkolben gleichzeitig den zweiten Auslass schließt, der beispielsweise zu einem Fronthubwerk führt. Beim Abziehen oder Abreißen der Verbraucherleitung wird der Sperrkolben wieder in seine Schließstellung gedrückt.

Wenn der Sperrkopf ein kegelförmiges Profil hat, gewährleistet er in der Schließstellung ein sicheres Anliegen auf dem Ventilsitz des ersten Auslasses.

Die Erfindung ist nachstehend an einem Ausführungsbeispiel erläutert, das in der Zeichnung dargestellt ist. In dieser zeigen:
- Figur 1: den Längsschnitt durch ein Umschaltventil gemäß der Erfindung in der Schließstellung des ersten Auslasses El, in der der zweite Auslass E2 geöffnet ist und
- Figur 2: einen Schnitt in der Ebene II-II der Figur 1, in der der Sperrkolben gegen die Kraft der Druckfeder den ersten Auslass E1 öffnet, während der zweite Auslass E2 geschlossen ist.

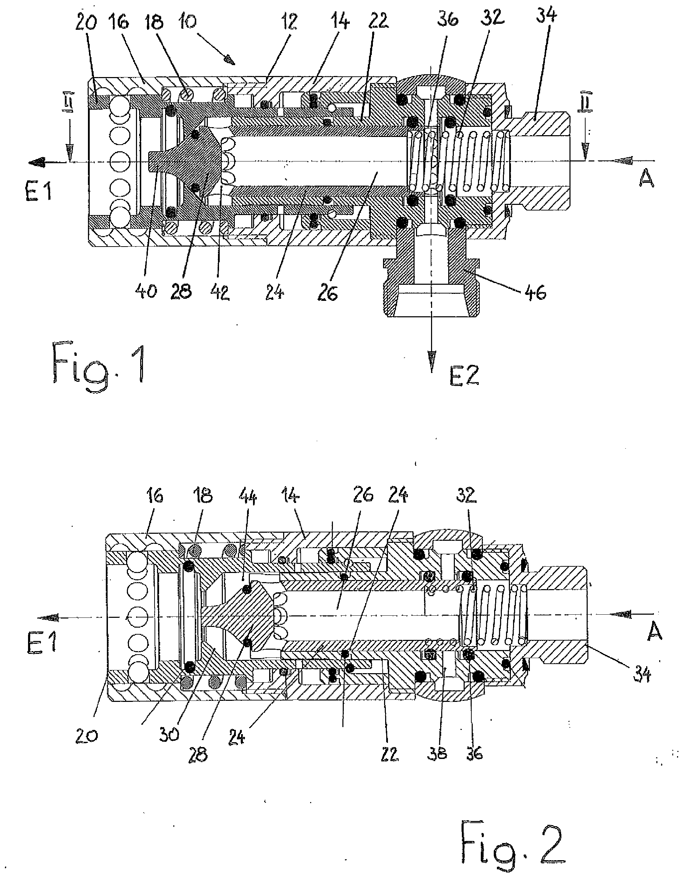

Die Figuren 1 und 2 zeigen ein hydraulisches Zweiwege-Umschaltventil 10 gemäß der Erfindung mit einem zylindrischen Gehäuse 12, das aus einer Gewindehülse 14 und einer darauf aufgeschraubten, vorderen Gewindehülse 16 zusammengesetzt ist. Zwischen beiden befindet sich eine Druckfeder 18.

In dieses Gehäuse 12 ist ein zylindrischer Einsatz 20 eingesetzt, der eine Lagerbuchse 22 für einen axial verschieblichen Sperrkolben 24 aufnimmt.

Der zylindrische Sperrkolben 24 hat einen Hohlraum 26, der an seinem in den Figuren linken Ende durch einen Sperrkopf 28 abgeschlossen ist. Der Sperrkopf 28 hat ein kegelförmiges Profil und wird in der Schließstellung der Figur 1 gegen einen kegelförmigen Ventilsitz 30 gedrückt, der am in den Figuren linken Ende des zylindrischen Einsatzes 20 ausgebildet ist.

Am dem Sperrkopf 28 gegenüberliegenden Ende des Sperrkolbens 24 befindet sich eine Druckfeder 32, die sich einerseits am Ende des Hohlraums 26 und andererseits an einem Gewindestutzen 34 abstützt, der auf das Gehäuse 12 aufgeschraubt ist.

Der Gewindestutzen 34 hat einen Einlassanschluss A für die Zuführung eines Druckmediums, beispielsweise Öl. Wie Figur 1 zeigt, drückt dieses den Sperrkolben 24 zusammen mit der Druckfeder 32 nach links, bis der Sperrkopf 28 auf seinem Ventilsitz 30 aufliegt, wodurch ein erster Auslass E1 geschlossen wird, der dem Einlassanschluss A axial gegenüberliegt. In dieser in Figur 1 gezeigten Stellung gibt das dem Sperrkolben 24 gegenüberliegende, offene Ende 36 des Sperrkolbens 24 eine radiale Abzweigung 38 zu einem zweiten Auslass E2 frei, der in einem quer liegenden Gewindeanschluss 46 ausgebildet ist, so dass, wie Figur 1 zeigt, das Druckmedium von dem Einlassanschluss A in den zweiten Auslass E2 mit Querabgang strömt, um beispielsweise ein Fronthubwerk zu betätigen.

Die Figuren 1 und 2 zeigen deutlich, dass der Sperrkopf 28 einen pilzartigen Stiel 40 hat, der in der Schließstellung axial aus dem ersten Auslass E1 vorsteht. Wenn in dieser Stellung eine nicht gezeigte Verbraucherleitung, die beispielsweise zu einem Anbaugerät führt, mechanisch gegen den Sperrkopf 28 drückt, gelangt dieser gegen die Kraft der Druckfeder 32 in die Stellung der Figur 2, in der der erste Auslass E1 geöffnet ist, während gleichzeitig der Sperrkolben 24 den zweiten Auslass E2 (Querabgang) schließt. Wenn umgekehrt die Verbraucherleitung abgezogen wird, wirkt das Umschaltventil 10 als Abreißkupplung, so dass die Druckfeder 32 sowie das in den Hohlraum 26 des Sperrkolbens 24 fließende Druckmedium den Sperrkolben 24 in die Schließstellung der Figur 1 drückt.

In der geöffneten Stellung des Sperrkolbens 24 gemäß Figur 2 strömt das Druckmedium über den Einlassanschluss A in den Hohlraum 26 und von diesem über schräge Verbindungsbohrungen 42, die vor dem Sperrkopf 28 ausgebildet sind, über einen Ringraum 44 in den ersten Auslass E1.

## Patentansprüche

1. Hydraulisches Umschaltventil (10) mit einem Sperrkolben (24), der längsverschieblich in einem Gehäuse (12) gelagert ist, das einen axialen Einlassanschluss (A) und einen axial gegenüberliegenden ersten Auslass (E1) sowie einen radial abzweigenden zweiten Auslass (E2) für ein Druckmedium hat, wobei der Sperrkolben (24) gegen die Kraft einer Druckfeder (32) aus einer den ersten Auslass (E1) schließenden Stellung, in der der zweite Auslass (E2) durch den Sperrkolben (24) geöffnet ist, in eine den zweiten Auslass (E2) schließende Stellung verschiebbar ist, in der der erste Auslass (E1) geöffnet ist, wobei der Sperrkolben (24) einen Sperrkopf (28) hat, der durch die Kraft der Druckfeder (32) in die den ersten Auslass (E1) schließenden Stellung gedrückt wird, in der er auf einem Ventilsitz (30) des ersten Auslasses (E1) anliegt und axial aus diesem vorsteht, während er bei Anschluss einer Verbraucherleitung mechanisch gegen die Kraft der Druckfeder (32) die Öffnungsstellung des ersten Auslasses (E1) freigibt, in der der Sperrkolben (24) den zweiten Auslass (E2) schließt, **dadurch gekennzeichnet, dass** der Sperrkolben (24) einen mit dem Einlassanschluss (A) verbundenen Hohlraum (26) hat, von dem in Strömungsrichtung vor dem Sperrkopf (28) Verbindungsbohrungen (42) zum ersten Auslass (E1) abzweigen, wobei sich am dem Sperrkopf (28) gegenüberliegenden Ende des Sperrkolbens (24) eine Druckfeder (32) befindet, die sich einerseits am Ende des Hohlraums (26) und andererseits an einem Gewindestutzen (34) abstützt, der auf das Gehäuse (12) aufgeschraubt ist.

## Claims

1. A hydraulic changeover valve (10) with a blocking piston (24) longitudinally slidably supported in a housing (12) having an axial inlet port (A) and an axial opposite first outlet (E1) as well as a radially branching off second outlet (E2) for a pressurized medium, wherein the blocking piston (24) is slidable against the force of a compression spring (32) from a position closing the first outlet (E1), in which the second outlet (E2) is opened by the blocking piston (24), to a position closing the second outlet (E2), in which the first outlet (E1) is opened, wherein the blocking piston (24) has a blocking head (28) being pressed by the force of the compression spring (32) to the position closing the first outlet (E1), where it abuts a valve seat (30) of the first outlet (E1) and axially protrudes from the same, whilst, when connecting a load line, mechanically releasing the opening position of the first outlet (E1) against the force of the compression spring (32), in which the blocking piston (24) closes the second outlet (E2), **characterized in that** the blocking piston (24) has a cavity (26) connected to the inlet port (A) from which, in the flow direction, connection boreholes (42) to the first outlet (E1) branch off before the blocking head (28), wherein a compression spring (32) is located at the end of the blocking piston (24) opposite to the blocking head (28) that, on the one hand, is supported on the end of the cavity (26), and, on the other hand, on a threaded stud (34) screwed onto the housing (12).

## Revendications

1. Vanne de commutation hydraulique (10) avec un piston de blocage (24) posé dans un boîtier (12) de manière à déplacement longitudinale, qui possède un orifice d'entrée axial (A) et une première évacuation axiale opposée (E1) ainsi qu'une seconde évacuation radiale de déviation (E2) pour un agent de pressurisation, où le piston de blocage (24) peut coulisser par la force d'un ressort de pression (32) à partir d'une position de fermeture de la première évacuation (E1), ouverte dans la seconde évacuation (E2) par le biais du piston de blocage (24), dans une position de fermeture de la seconde évacuation (E2), dans laquelle la première évacuation (E1) est ouverte, où le piston de blocage (24) possède une tête de blocage (28) enfoncée par la force du ressort de pression (32) dans la position de fermeture de la première évacuation (E1), dans laquelle il est placé sur un siège de vanne (30) de la première évacuation (E1) et dépasse de celui-ci de manière axiale, alors qu'il déclenche mécaniquement la position d'ouverture de la première évacuation (E1) en cas de raccordement du câble d'un consommateur par la force du ressort de pression (32), dans laquelle le piston de blocage (24) ferme la seconde évacuation (E2), **caractérisée en ce que** le piston de blocage (24) possède une cavité (26) reliée à l'orifice d'entrée (A), depuis lequel des trous de raccordement (42) dans le sens de l'écoulement avant la tête de blocage (28) dévient vers la première évacuation (E1), où se trouve un ressort de pression (32) sur l'extrémité du piston de blocage (24) opposée à la tête de blocage (28) qui s'appuie, d'une part, sur l'extrémité de la cavité (26) et, d'autre part, sur un embout fileté (34) vissé sur le boîtier (12).
